# EUROPÄISCHE PATENTSCHRIFT

(11) **EP 2 839 948 B1**
(45) Veröffentlichungstag und Bekanntmachung des Hinweises auf die Patenterteilung: **04.05.2016**
(21) Anmeldenummer: 14002815.0
(22) Anmeldetag: 13.08.2014
(51) Int. Cl.: B29C 67/00, B22F 3/105, B29C 35/00

(54) **Vorrichtung zum Herstellen dreidimensionaler Objekte**
Device for manufacturing three-dimensional objects
Procédé de fabrication d'objets tridimensionnels

(30) Priorität: 23.08.2013 DE 102013109162
(43) Veröffentlichungstag der Anmeldung: 25.02.2015
(73) Patentinhaber: FIT AG, 92331 Lupburg (DE)
(72) Erfinder: Fruth, Carl, 92331 Parsberg (DE)
(74) Vertreter: Schneider, Andreas

(56) Entgegenhaltungen:
- EP-A1- 1 674 192
- WO-A1-2006/125507

## Beschreibung

Die Erfindung betrifft eine Vorrichtung sowie ein Verfahren zum Herstellen dreidimensionaler Objekte durch selektives Verfestigen eines schichtweise aufgebrachten Aufbaumaterials.

Aus dem Stand der Technik sind Vorrichtungen und Verfahren zur Herstellung dreidimensionaler Objekte durch selektives Verfestigen eines schichtweise aufgetragenen Aufbaumaterials in großer Zahl bekannt. Zu nennen sind hier beispielsweise das Lasersintern oder das Selektive Maskensintern. Anlagen, mit denen ein solches Schichtbauverfahren durchgeführt wird, werden auch als Rapid Prototyping-Systeme bezeichnet. Diese Schichtbauverfahren dienen zur Herstellung von schichtweise aufgebauten Bauteilen aus verfestigbarem Material, wie Harz, Kunststoff, Metall oder Keramik, und werden beispielsweise zur Fertigung von technischen Prototypen verwendet. Dabei können mit Hilfe einer additiven Fertigungsmethode dreidimensionale Objekte direkt aus CAD-Daten hergestellt werden.

Bei einem solchen Schichtbauverfahren erfolgt der Aufbau der Objekte schichtweise, d. h. es werden Schichten eines Aufbaumaterials sukzessive übereinander aufgetragen. Vor dem Aufbringen der jeweils nächsten Schichten werden die dem zu fertigenden Objekt entsprechenden Stellen in den jeweiligen Schichten selektiv verfestigt. Das Verfestigen erfolgt beispielsweise durch lokales Erhitzen eines zumeist pulverförmigen Schichtrohmaterials mit Hilfe einer Strahlungsquelle. Indem gezielt Strahlung in geeigneter Weise in die gewünschten Bereiche eingebracht wird, kann eine exakt definierte, beliebig geartete Objektstruktur erzeugt werden. Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden.

Typischerweise wird das zu verfestigende Aufbaumaterial auf eine Temperatur vorgewärmt, die unterhalb der Verarbeitungstemperatur liegt. Mit Hilfe eines zusätzlichen Energieeintrags wird anschließend die Verarbeitungstemperatur erreicht.

Beispielsweise wird ein Kunststoffmaterial bei einem Lasersinterprozeß auf eine Temperatur unterhalb der Sintertemperatur vorgewärmt. Die durch den Laser eingebrachte Energie trägt dann lediglich die Differenzwärmemenge zum Aufschmelzen der Pulverteilchen bei.

Das Vorwärmen erfolgt in vielen Fällen über ein Erwärmen der Aufbauplattform. Mit ansteigender Bauteilhöhe nimmt bei einem solchen Vorwärmen "von unten" jedoch der Wärmestrom der Vorwärmung durch Verluste und zunehmendes Volumen der Pulverschüttung ab.

Auch andere Verfahren führen zu einer unerwünschten unregelmäßigen Temperaturverteilung in dem Aufbaumaterial. Dies trifft insbesondere auch auf solche Verfahren zu, bei denen das Vorwärmen über eine Wärmezufuhr "von oben" erfolgt. Dabei werden zeitweise beheizbare Einrichtungen über der Aufbauschicht plaziert. Durch komplizierte Steuerungen der Heizkurve und andere aufwendige Maßnahmen wird versucht, eine gleichmäßige Temperaturverteilung in dem vorzuwärmenden Aufbaumaterial zu erreichen.

WO 2006/125507 A1 offenbart eine Vorrichtung gemäß dem Oberbegriff des Anspruchs 1 und ein Verfahren gemäß dem Oberbegriff des Anspruchs 10. Eine Aufgabe der vorliegenden Erfindung ist es, den Herstellungsprozeß zu verbessern, insbesondere den Wärmeeintrag zu optimieren.

Diese Aufgabe wird durch eine Vorrichtung nach Anspruch 1 bzw. durch ein Verfahren nach Anspruch 10 gelöst. Vorteilhafte Ausführungen der Erfindung sind in den Unteransprüchen angegeben. Die im Folgenden im Zusammenhang mit der Vorrichtung erläuterten Vorteile und Ausgestaltungen gelten sinngemäß auch für das erfindungsgemäße Verfahren und umgekehrt.

Die Erfindung schlägt vor, die aus dem Stand der Technik bekannte Vorgehensweise einer getakteten Herstellung, bei der innerhalb eines Taktes nach einem Materialauftrag zunächst ein Vorwärmen und anschließend ein selektives Verfestigen erfolgt, bevor in einem sich anschließenden neuen Takt erneut ein Materialauftrag vorgenommen wird, nicht mehr weiterzuverfolgen. Statt dessen schlägt die Erfindung einen kontinuierlichen Herstellungsprozeß vor, bei dem das Aufbringen des Aufbaumaterials, das Vorwärmen und das selektive Verfestigen durch lokales Erhitzen des Aufbaumaterials gleichzeitig erfolgt, und zwar an unterschiedlichen Stellen ein und desselben herzustellenden Objektes bzw. auch an mehreren Objekten gleichzeitig, sofern mehrere Objekte auf der Aufbauplattform hergestellt werden.

Die erfindungsgemäße Vorrichtung umfaßt eine in einer x-y-Ebene angeordnete Aufbauplattform, auf der wenigstens ein dreidimensionales Objekt schichtweise erzeugt wird, ein die Aufbauplattform zumindest teilweise überdeckendes Heizelement zum Eintragen von Wärmeenergie in das Aufbaumaterial sowie eine Antriebseinrichtung zum Erzeugen einer Relativbewegung zwischen der Aufbauplattform und dem Heizelement in x- und/oder y-Richtung. Das Heizelement weist wenigstens zwei gleichzeitig verwendbare Funktionsöffnungen auf, wobei eine der wenigstens zwei Funktionsöffnungen als Materialdurchlaß und eine andere der wenigstens zwei Funktionsöffnungen als Strahlungsdurchlaß ausgebildet ist.

Entsprechend umfaßt das erfindungsgemäße Verfahren die Schritte: schichtweises Erzeugen des wenigstens einen dreidimensionalen Objektes auf einer in einer x-y-Ebene angeordneten Aufbauplattform, Eintragen von Wärmeenergie in das Aufbaumaterial mit Hilfe eines die Aufbauplattform zumindest teilweise überdeckenden Heizelements, Erzeugen einer Relativbewegung zwischen der Aufbauplattform und dem Heizelement in x- und/oder y-Richtung mittels einer Antriebseinrichtung sowie gleichzeitiges Durchlassen von Aufbaumaterial und Strahlungsenergie durch das Heizelement unter Verwendung von wenigstens zwei Funktionsöffnungen.

Eine grundlegende Idee der Erfindung besteht in der Verwendung eines zum Vorwärmen des Aufbaumaterials dienenden Heizelementes, welches sich durch Funktionsöffnungen auszeichnet, die als Materialdurchlaß und Strahlungsdurchlaß, mithin also als Beschichtungsöffnung zum Aufbringen von Aufbaumaterial und als Belichtungsöffnung zum lokalen Erhitzen des Aufbaumaterials dienen. Wird ein solches Heizelement in geeigneter Weise relativ zu der Aufbauplattform bewegt, kann ein gleichzeitiges Aufbringen von Aufbaumaterial, Vorwärmen und selektives Verfestigen erfolgen und damit ein nicht getaktetes, ununterbrochenes Herstellen des wenigstens einen Objektes. Der Aufbau des Objektes bzw. der Objekte erfolgt mit anderen Worten kontinuierlich, wobei die Aufbaugeschwindigkeit durch die Relativbewegung zwischen Aufbauplattform und Heizelement bestimmt wird. Die geometrische Anordnung der sich in unterschiedlichen Herstellungsprozeßphasen befindenden Objektbereiche, insbesondere der Abstand dieser Objektbereiche zueinander, wird durch die Anordnung der Funktionsöffnungen in dem Heizelement bestimmt, insbesondere durch den Abstand dieser Funktionsöffnungen zueinander.

Beispielsweise kann in einem ersten Objektbereich das Aufbaumaterial in Form einer frisch aufgebrachten Pulverschüttung durch das Heizelement vorgewärmt werden, während in einem in Bewegungsrichtung hinter dem ersten Objektbereich angeordneten zweiten Objektbereich mit Hilfe von durch eine Belichtungsöffnung durchtretender Strahlungsenergie gerade eine Schicht n verfestigt wird. Zeitgleich erfolgt in einem dritten Objektbereich, der in Bewegungsrichtung hinter dem zweiten Objektbereich liegt, ein Nachheizen der dort kurz zuvor verfestigten Aufbauschicht n durch das Heizelement, während in einem hinter dem dritten Objektbereich liegenden vierten Objektbereich durch eine Beschichtungsöffnung hindurchgeführtes weiteres Aufbaumaterial für eine nächste Schicht n+1 auf die bereits vorhandene Schicht n aufgebracht wird. Die Objektbereiche können dabei Bereiche eines Objektes oder aber auch Bereiche unterschiedlicher Objekte sein, wenn mehrere Objekte auf der Aufbauplattform angeordnet sind.

Die Wärmezufuhr für das Vorwärmen erfolgt "von oben", wodurch die Nachteile einer Wärmezufuhr über die Aufbauplattform nicht auftreten. Zugleich erfolgt die Wärmezufuhr vorzugsweise nicht nur zeitweise, nämlich nicht nur dann, wenn sich das Heizelement wie im Stand der Technik für kurze Zeit oberhalb der Aufbauschicht befindet, sondern, ermöglicht durch die neuartige kontinuierliche Arbeitsweise, dauerhaft. Damit wird auf einfache Art und Weise eine Optimierung des Wärmeeintrags erreicht. Zugleich wird der Herstellungsprozeß insgesamt verbessert.

Darüber hinaus ermöglicht es die vorliegende Erfindung, sich von der Notwendigkeit einer gleichmäßigen Temperaturverteilung zu lösen. Da an unterschiedlichen Stellen das Herstellungsverfahren unterschiedlich weit fortgeschritten ist, können an unterschiedlichen Stellen unterschiedliche Temperaturen von Vorteil sein. So kann beispielsweise in einem Bereich eine Vorwärmtemperatur zum Vorbereiten des Aufbaumaterials auf die bevorstehende lokale Erhitzung vorteilhaft sein; in einem benachbarten Bereich kann hingegen eine Nachheiztemperatur vorliegen, wie sie zum Erreichen bestimmter Eigenschaften der bereits verfestigten Schicht vorteilhaft ist, beispielsweise um Verzug zu verhindern.

Da das Heizelement dauerhaft zur Verfügung steht, kann eine solche definierte ungleichmäßige Temperaturverteilung auf besonders einfache Weise verwirklicht werden. In einer vorteilhaften Ausführungsform der Erfindung weist das Heizelement mehrere unterschiedlich temperierbare Bereiche aufweist. Dies wird beispielsweise mit Hilfe mehrerer, voneinander unabhängig betreibbarer Heizmodule erreicht.

Auch kann eine zusätzliche Wärmequelle zur Bereitstellung von Wärmeenergie vorgesehen sein, insbesondere in Form einer oberhalb des Heizelements angeordneten Strahlungsquelle. In diesem Fall ist wenigstens eine der Funktionsöffnungen als Heizöffnung zum zusätzlichen Eintragen von Wärmeenergie ausgebildet. Dabei kann es sich bei der Heizöffnung um eine Funktionsöffnung handeln, die bereits eine andere Funktion ausübt; beispielsweise kann ein bereits als Belichtungsöffnung dienender Strahlungsdurchlaß zugleich als Heizöffnung dienen.

Für die Übertragung der Heizenergie auf das Aufbaumaterial besonders vorteilhaft hat sich eine Ausführungsform der Erfindung erwiesen, bei der das Heizelement im wesentlichen plattenförmig ausgebildet ist. Die Plattenform des Heizelements ermöglicht zugleich eine besonders einfache Ausführung der Funktionsöffnungen. Vorteilhafterweise sind Heizelement und Aufbauplattform dabei derart ausgeführt, daß sie sich möglichst großflächig, vorzugsweise vollständig, überdecken bzw. während der Herstellungsprozesses möglichst großflächig, vorzugsweise vollständig, in Überdeckung miteinander gebracht werden können.

In einer bevorzugten Ausführungsform der Erfindung ist das Heizelement oberhalb der Aufbauplattform angeordnet. In einer Variante ist das Heizelement dabei von der jeweils obersten Aufbauschicht beabstandet. Das Aufwärmen erfolgt durch Wärmestrahlung. In einer alternativen Variante berührt das Heizelement die oberste Aufbauschicht. Das Aufwärmen erfolgt dann durch Wärmeleitung.

Befindet sich die Aufbauplattform innerhalb einer im Betriebszustand geschlossenen Prozeßkammer, dann kann das Heizelement als Begrenzungswand der Prozeßkammer dienen. Mit anderen Worten wird in diesem Fall die Prozeßkammer durch das Heizelement abgeschlossen. Das Heizelement ist dann ein Teil der Prozeßkammer.

Bei der Beschichtungsöffnung handelt es sich stets um eine tatsächliche Öffnung im Sinne eines Materialdurchbruchs. Für die Belichtungsöffnung muß das Heizelement hingegen nicht zwangsläufig durchbrochen sein. Die Belichtungsöffnung kann auch als ein Bereich geeigneten Materials in dem Grundkörper des Heizelements ausgeführt sein, das sich für einen Strahlungsdurchgang eignet.

In einer bevorzugten Ausführungsform der Erfindung erfolgt das Einbringen von Strahlungsenergie durch die Belichtungsöffnung, ohne daß diese Öffnung vollständig ausgeleuchtet wird. Statt dessen erfolgt eine gezielte Bestrahlung des unterhalb dieser Öffnung angeordneten Aufbaumaterials innerhalb der Grenzen dieser Öffnung. Die Strahlung kann dabei von einer oder mehreren Strahlungsquellen stammen. Beispielsweise können zum lokalen Erhitzen des Aufbaumaterials ein oder mehrere Laserstrahlen innerhalb des durch die Funktionsöffnung bereitgestellten Fensters eine lineare Hin- und Herbewegung innerhalb der Funktionsöffnung vollführen oder aber der oder die Laserstrahlen werden innerhalb des Fensters auf einer nichtlinearen Bahnkurve definiert geführt, jeweils in Abhängigkeit von der zu erzeugenden Struktur. Die Führung der Strahlung erfolgt mit Hilfe einer geeigneten Steuerung. Das zuvor auf eine Temperatur unterhalb der Verarbeitungstemperatur vorgewärmte Aufbaumaterial wird lokal weiter erhitzt. Mit Hilfe dieses zusätzlichen Energieeintrags wird die Verarbeitungstemperatur erreicht.

In einer einfachen Variante der Erfindung sind Anordnung und Größe der Funktionsöffnungen unveränderlich. So hat es sich als vorteilhaft erwiesen, streifenförmige Funktionsöffnungen zu verwenden, die parallel zueinander liegen. Die Funktionsöffnungen sind dabei vorteilhafterweise senkrecht zu der Richtung der Relativbewegung, beispielsweise senkrecht zu der x- oder der y-Richtung, in dem Heizelement angeordnet. Alternativ ist es möglich, daß die Funktionsöffnungen schräg, d.h. unter einem Winkel zu der Bewegungsrichtung, angeordnet sind. Bei der vorliegenden Erfindung von Vorteil ist es, daß die Form, Anordnung und Größe der Funktionsöffnungen an die Besonderheiten des Verfahrens angepaßt werden können. So können anstelle von streifen- oder schlitzförmigen Funktionsöffnungen für alle oder einzelne Funktionen beispielsweise auch lochförmige Funktionsöffnungen oder Funktionsöffnungen beliebiger anderer Form vorgesehen sein.

In einer alternativen Variante sind Form, Anordnung und/oder Größe der Funktionsöffnungen veränderbar. Beispielsweise kann es von Vorteil sein, die Größe der Belichtungsöffnung veränderbar auszuführen, insbesondere dann, wenn diese Funktionsöffnung als Blende dient, d. h. zur Begrenzung des Querschnitts der eingebrachten Strahlung. Ebenfalls kann es von Vorteil sein, die Größe der Beschichtungsöffnung veränderbar auszuführen, insbesondere dann, wenn Form und/oder Größe dieser Öffnung unmittelbar den Auftragsort bzw. das Volumen des je Zeiteinheit aufgebrachten Aufbaumaterials bestimmen. Eine Veränderung der Funktionsöffnungen kann insbesondere auch während der Laufzeit, also im laufenden Herstellungsprozeß erfolgen. Hierfür sind dann gegebenenfalls zusätzliche geeignete Antriebs- und Steuerungseinrichtungen vorgesehen.

Mit der vorliegenden Erfindung wird nicht nur der Wärmeeintrag in das Aufbaumaterial verbessert. Durch ein geeignetes Zusammenspiel der Anordnung und Größe der Funktionsöffnungen und der Relativbewegung zwischen Heizelement und Aufbauplattform sowie der Bereitstellung und/oder Führung der Strahlung zum lokalen Verfestigen des Aufbaumaterials kann der Herstellungsprozeß darüber hinaus auch besonders effizient durchgeführt werden.

Hierzu dient eine zentrale Steuerung des Herstellungsprozesses unter Verwendung eines Datenmodells zur Beschreibung des mit Hilfe des Schichtaufbauverfahrens herzustellenden Objektes. Die Steuerung umfaßt dabei alle relevanten Vorgänge des gleichzeitig an mehreren Stellen in unterschiedlichen Herstellungsphasen ablaufenden, d. h. unterschiedlich weit fortgeschrittenen Herstellungsprozesses. Mit anderen Worten erfolgt die Steuerung stets entsprechend dem tatsächlichen Fortgang des Herstellungsprozesses, wobei hierzu Sensordaten geeigneter Sensoren, insbesondere Temperatursensoren, verwendet werden. Die Steuerung umfaßt insbesondere die Steuerung der Heizung des Heizelements, hier gegebenenfalls die definierte Steuerung einzelner Temperaturbereiche. Die Steuerung umfaßt auch die Steuerung der Antriebseinrichtung für die Relativbewegungen zwischen Heizelement und Aufbauplattform und die Steuerung der Bereitstellungs- und/oder Aufbringeinrichtung zum Bereitstellen und/oder Aufbringen des Aufbaumaterials sowie die Steuerung der geführten Strahlungsquelle(n) zum lokalen Erhitzen des Aufbaumaterials und gegebenenfalls die Steuerung der zusätzlichen Strahlungsquelle zur Temperierung des Aufbaumaterials, wie auch gegebenenfalls die Steuerung der in Anordnung und/oder Größe veränderbaren Funktionsöffnungen.

Alle im Zusammenhang mit der Steuerung der Schichtbauanlage bzw. der Durchführung des erfindungsgemäßen Verfahrens erforderlichen Rechenoperationen werden dabei durch eine oder mehrere Datenverarbeitungseinheiten ausgeführt, die zur Durchführung dieser Operationen ausgebildet sind. Jede dieser Datenverarbeitungseinheiten weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß den beschriebenen Verfahren. Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Ein Ausführungsbeispiel der Erfindung wird nachfolgend anhand der Zeichnungen näher erläutert. Hierbei zeigen:
- Fig. 1: eine schematische Darstellung einer erfindungsgemäßen Vorrichtung mit einer im Schnitt dargestellten, stark vereinfachten Prozeßkammer,
- Fig. 2: eine schematische Darstellung eines über einer Aufbauplattform angeordneten Heizelements in Draufsicht,
- Fig. 3: vereinfachte Schnittdarstellungen von Schichten des aufzubauenden Objektes in unterschiedlichen Herstellungsphasen.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

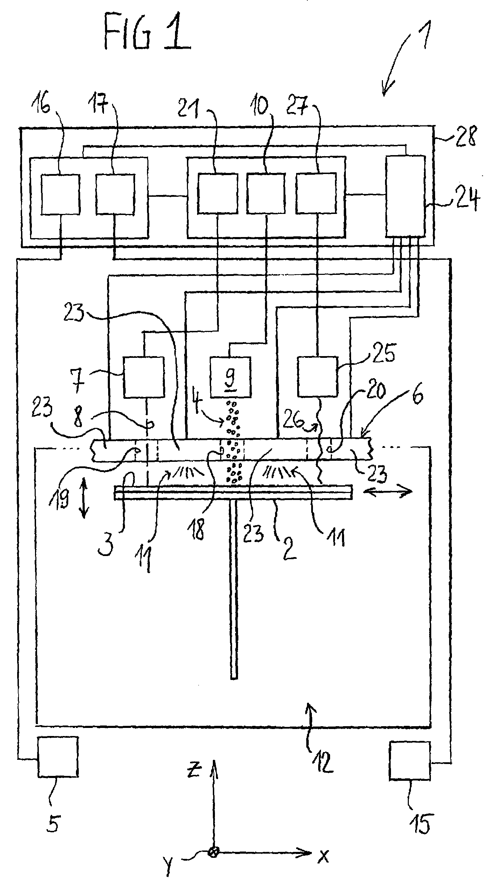

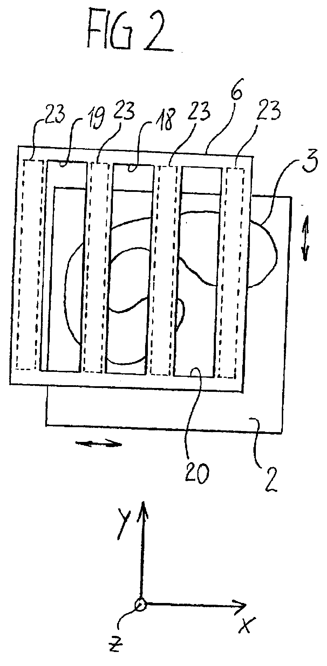

Anhand der Fig. 1 und 2 wird als Vorrichtung zum Herstellen wenigstens eines dreidimensionalen Objektes durch selektives Verfestigen eines schichtweise aufgebrachten Aufbaumaterials beispielhaft eine Vorrichtung 1 zum Lasersintern beschrieben. Die Erfindung ist jedoch nicht auf dieses spezielle Verfahren beschränkt. Die Erfindung ist auch auf andere additive Fertigungsverfahren anwendbar, wie beispielsweise Laserschmelzen, Maskensintern, Drop on Powder / Drop-on-Bed, Stereolithographie und dergleichen.

Bei der Beschreibung der Erfindung kommt ein orthogonales Koordinatensystem (x, y, z) zur Anwendung.

Die Vorrichtung 1 zum Lasersintern umfaßt eine in einer x-y-Ebene angeordnete Aufbauplattform 2, auf der ein dreidimensionales Objekt 3 in bekannter Art und Weise schichtweise erzeugt wird. Bei dem Aufbaumaterial 4 handelt es sich um ein geeignetes Kunststoffpulver. Nach der Herstellung einer Schicht n wird zur Herstellung einer neuen Schicht n+1 die Aufbauplattform 2 mit den bereits erstellten und erhärteten Schichten um eine bestimmte Weglänge nach unten verfahren. Hierzu dient eine Antriebseinrichtung 5 zum Erzeugen einer Relativbewegung zwischen der Aufbauplattform 3 und einem später genauer beschriebenen Heizelement 6 in z-Richtung, d. h. senkrecht zu der Aufbauebene. Bei der Antriebseinrichtung 5 handelt es sich beispielsweise um einen Elektromotor.

Zwischen dem Verfestigen einer Schicht n und dem Aufbringen von neuem Aufbaumaterial 4 für eine nachfolgende Schicht n+1 kann es vorgesehen sein, überschüssiges Aufbaumaterial 4 von der Aufbauplattform 2 zu entfernen. In diesem Fall ist eine hierfür geeignete Einrichtung (nicht abgebildet) vorgesehen, beispielsweise in Form eines Abstreifmessers oder dergleichen, welches vorteilhafterweise mit dem Heizelement 6 verbunden ist oder mit diesem zusammenwirkt.

Die Vorrichtung 1 umfaßt wenigstens eine Strahlungsquelle 7, die Strahlungsenergie zum lokalen Erhitzen von Aufbaumaterial 4 bereitstellt, um dieses selektiv zu verfestigen. Bei der wenigstens einen Strahlungsquelle 7 handelt es sich beispielsweise um einen Laser, der einen Laserstrahl 8 geführt abgibt.

Die Vorrichtung 1 umfaßt außerdem wenigstens eine Bereitstellungs- und/oder Aufbringeinrichtung 9, mit der Aufbaumaterial 4 bereitstellt und/oder auf die Aufbauplattform 2 oder eine bereits vorhandene Aufbauschicht aufgebracht wird. Bei der Bereitstellungs- und/oder Aufbringeinrichtung 9 handelt es sich beispielsweise um eine Einrichtung zum Aufbringen einer Pulverschüttung. Die Bereitstellungs- und/oder Aufbringeinrichtung 9 ist mit einer entsprechenden Steuerung 10 verbunden, die den Materialauftrag steuert.

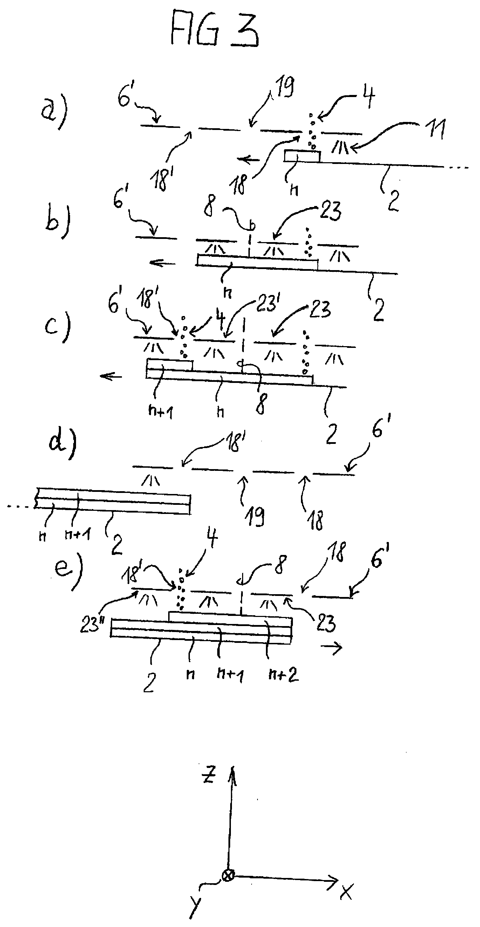

Die Vorrichtung 1 umfaßt weiter das oben bereits erwähnte, die Aufbauplattform 2 während der Herstellungsprozesses dauerhaft, zumindest teilweise überdeckende Heizelement 6 zum Eintragen von Wärmeenergie in das Aufbaumaterial 4. Das Heizelement 6 ist im wesentlichen plattenförmig ausgebildet. Es ist oberhalb der Aufbauplattform 2 angeordnet, wobei es von der jeweils obersten Aufbauschicht beabstandet ist. Der Abstand beträgt typischerweise zwischen 100 µm und 10 mm. Das Aufwärmen des Aufbaumaterials 4 erfolgt durch von dem Heizelement 6 abgegebene Wärmestrahlung 11, wie sie in den Fig. 1 und 3 symbolisch dargestellt ist.

Die Aufbauplattform 2 befindet sich innerhalb einer im Betriebszustand geschlossenen Prozeßkammer 12, die in Fig. 1 nur schematisch angedeutet ist. Das Heizelement 6 dient dabei als Begrenzungswand der Prozeßkammer 12. Genauer gesagt ist das Heizelement 6 als Teil der oberen Abdeckung 13 der Prozeßkammer 12 ausgeführt.

Die Vorrichtung 1 umfaßt zudem eine Antriebseinrichtung 15 zum Erzeugen einer Relativbewegung zwischen der Aufbauplattform 2 und dem Heizelement 6 in x- und/oder y-Richtung, d. h. in einer Schichtrichtung. Bei der Antriebseinrichtung 15 handelt es sich beispielsweise um einen Elektromotor. Beide Antriebseinrichtungen 5, 15 sind mit entsprechenden Antriebssteuerungen 16, 17 verbunden.

In dem hier beschriebenen Ausführungsbeispiel bewegt die Antriebseinrichtung 15 die Aufbauplattform 2 relativ zu dem feststehenden Heizelement 6. Die Hauptbewegungsrichtung ist die x-Richtung. Im einfachsten Fall beschränkt sich die Bewegung der Aufbauplattform 2 auf diese Hauptbewegungsrichtung. Falls für den Herstellungsprozeß erforderlich oder vorteilhaft, kann die Bewegung in x-Richtung von einer Bewegung der Aufbauplattform 2 in y-Richtung überlagert werden.

Das Heizelement 6 weist wenigstens zwei, in dem in Fig. 1 dargestellten Beispiel drei gleichzeitig verwendbare, voneinander beabstandete Funktionsöffnungen 18, 19, 20 auf. Die Funktionsöffnungen 18, 19, 20 sind schlitz- bzw. streifenförmig, langgestreckt rechteckig, liegen parallel zueinander und senkrecht zu der Hauptbewegungsrichtung, hier der x-Richtung. Eine der Funktionsöffnungen ist als Materialdurchlaß 18 und eine andere der Funktionsöffnungen als Strahlungsdurchlaß 19 ausgebildet. Während des Erzeugens des Objektes 3 wird gleichzeitig sowohl Aufbaumaterial 4 als auch Strahlungsenergie, hier in Form des Laserstrahls 8, durch die Funktionsöffnungen 18, 19 hindurchgelassen.

Anders ausgedrückt ist die eine Funktionsöffnung als Beschichtungsöffnung 18 zum Aufbringen von Aufbaumaterial 4 auf die Aufbauplattform 2 oder eine bereits vorhandene Aufbauschicht ausgebildet und die andere Funktionsöffnung ist als Belichtungsöffnung 19 zum gleichzeitigen Einbringen von Strahlungsenergie der wenigstens einen Strahlungsquelle 7 in das aufgebrachte Aufbaumaterial 4 zum Verfestigen des Aufbaumaterials 4 ausgebildet.

Das Einbringen von Strahlungsenergie zum lokalen Erhitzen des Aufbaumaterials 4 erfolgt, indem der Laserstrahl 8 durch die Belichtungsöffnung 19 hindurch auf einer definierten Bahn geführt wird. Die Führung des Laserstrahls 8 erfolgt mit Hilfe einer geeigneten Antriebs- und Steuerungseinrichtung 21.

Das Heizelement 6 weist mehrere, voneinander unabhängig ansteuerbare Heizmodule 23 auf, die zwischen bzw. neben den Funktionsöffnungen 18, 19, 20 angeordnet sind. Alle Heizmodule 23 des Heizelements 6 sind mit einer Heizungssteuerung 24 verbunden. Das Arbeitsprinzip der Heizmodule 23 beruht beispielsweise auf dem Prinzip der elektrischen Induktion. Geeignete andere Funktionsweisen der Heizmodule sind ebenfalls möglich.

Die Vorrichtung 1 umfaßt in dem in Fig. 1 illustrierten Beispiel auch eine zusätzliche Wärmequelle in Form einer oberhalb des Heizelements 6 angeordneten Strahlungsquelle 25 zur Bereitstellung von Wärmeenergie. Bei dieser zusätzlichen Strahlungsquelle 25 handelt es sich beispielsweise um einen Infrarotstrahler, der Infrarotstrahlung 26 abgibt. Für diese Strahlungsquelle 25 ist ebenfalls eine geeignete Steuerung 27 vorgesehen. Dieser zusätzlichen Strahlungsquelle 25 ist eine eigene Funktionsöffnung 20 zugewiesen, die somit als Heizöffnung dient.

Eine zentrale Steuerung 28 ist für den kontrollierten Ablauf des Herstellungsverfahrens verantwortlich. Die Steuerung 28 umfaßt hierfür alle relevanten Teilsteuerungen 10, 16, 17, 21, 24, 27.

Anhand der Fig. 3 werden nachfolgend verschiedene Phasen der Herstellung beschrieben. Dabei kommt ein von dem in den Fig. 1 und 2 gezeigten Heizelement 6 verschiedenes Heizelement 6' zur Anwendung, welches über drei Funktionsöffnungen verfügt, nämlich über zwei Beschichtungsöffnungen 18, 18' und eine zwischen den Beschichtungsöffnungen 18, 18' angeordnete Belichtungsöffnung 19.

In Fig. 3a bewegt sich die Aufbauplattform 2, angetrieben von der Antriebseinrichtung 15, in x-Richtung unter der ersten Beschichtungsöffnung 18 des Heizelements 6 hindurch. Es wird Aufbaumaterial 4 für eine Schicht n auf die Aufbauplattform 2 aufgebracht.

In Fig. 3b bewegt sich die Aufbauplattform 2 in x-Richtung weiter. Das kurz zuvor aufgebrachte Aufbaumaterial 4 wird durch ein zwischen der ersten Beschichtungsöffnung 18 und der Belichtungsöffnung 19 in dem Grundkörper des Heizelements 6 angeordnetes Heizmodul 23 auf eine Temperatur unterhalb der Sintertemperatur vorgewärmt. Gleichzeitig erfolgt in einen benachbarten, kurz zuvor vorgewärmten Objektbereich ein Einbringen zusätzlicher Wärmeenergie mit Hilfe des Laserstrahls 8 durch die Belichtungsöffnung 19, wodurch die Pulverteilchen aufschmelzen.

In Fig. 3c bewegt sich die Aufbauplattform 2 in x-Richtung weiter. Bevor die Aufbauplattform 2 die zweite Beschichtungsöffnung 18' erreicht, wird sie, angetrieben von der Antriebseinrichtung 5, in z-Richtung eine erforderliche Wegstrecke nach unten bewegt. Durch die zweite Beschichtungsöffnung 18' wird Aufbaumaterial 4 für eine weitere Schicht n+1 aufgebracht. Kurz zuvor wurde dieser Objektbereich durch ein zwischen der Belichtungsöffnung 19 und der zweiten Beschichtungsöffnung 18' angeordneten weiteres Keizmodul 23' erneut erwärmt.

In Fig. 3d hat die Aufbauplattform 2 ihren einen Umkehrpunkt erreicht. Die Schichten n und n+1 wurden erzeugt. Da keine Belichtungsöffnung 19 mehr über der Aufbauplattform 2 angeordnet ist, findet in diesem Augenblick keine Laserbestrahlung mehr statt. Auch das Aufbringen von Aufbaumaterial 4 erfolgt nur solange, wie wenigstens eine der beiden Beschichtungsöffnungen 18, 18' über der Aufbauplattform 2 angeordnet ist.

In Fig. 3e bewegt sich die Aufbauplattform 2 in x-Richtung, entgegengesetzt zu der ersten Bewegung, unter dem Heizelement 6 hindurch. Mit Hilfe der zweiten Beschichtungsöffnung 18' ist bereits ein neuer Materialauftrag für die nächste Schicht n+2 erfolgt, ebenso wie ein Vorwärmen mit Hilfe eines dritten Heizmoduls 23". Zuvor wurde die Aufbauplattform 2, angetrieben von der Antriebseinrichtung 5, erneut eine erforderliche Wegstrecke in z-Richtung nach unten bewegt. Durch die Belichtungsöffnung 19 erfolgt eine lokale Bestrahlung mit dem Laserstrahl 8 zum Verfestigen der zu erzeugenden Struktur. Das erste Heizmodul 23 dient zum Nachheizen. Bei einer weiteren Bewegung der Aufbauplattform 2 wird in Kürze durch die erste Beschichtungsöffnung 18 ein Materialauftrag für die Schicht n+3 erfolgen.

### Bezugszeichenliste

- 1: Vorrichtung zum Lasersintern
- 2: Aufbauplattform
- 3: Objekt
- 4: Aufbaumaterial
- 5: Antriebseinrichtung (z)
- 6: Heizelement
- 7: Strahlungsquelle, Laser
- 8: Laserstrahl
- 9: Bereitstellungs-/Aufbringeinrichtung
- 10: Steuerung des Materialauftrags
- 11: Wärmestrahlung
- 12: Prozeßkammer
- 13: Abdeckung
- 14: (frei)
- 15: Antriebseinrichtung (x/y)
- 16: Antriebssteuerung (z)
- 17: Antriebssteuerung (x/y)
- 18: Funktionsöffnung, Materialdurchlaß, Beschichtungsöffnung
- 19: Funktionsöffnung, Strahlungsdurchlaß, Belichtungsöffnung
- 20: Funktionsöffnung, Heizöffnung
- 21: Antriebs- und Steuerungseinrichtung des Lasers
- 22: (frei)
- 23: Heizmodul
- 24: Heizungssteuerung
- 25: Strahlungsquelle, IR-Strahler
- 26: Infrarotstrahlung
- 27: Steuerung der Zusatzheizung
- 28: zentrale Steuerung

## Patentansprüche

1. Vorrichtung (1) zum Herstellen dreidimensionaler Objekte (3) durch selektives Verfestigen eines schichtweise aufgebrachten Aufbaumaterials (4),
- mit einer in einer x-y-Ebene angeordneten Aufbauplattform (2), auf der wenigstens ein dreidimensionales Objekt (3) schichtweise erzeugt wird,
- mit einem die Aufbauplattform (2) zumindest teilweise überdeckenden Heizelement (6) zum Eintragen von Wärmeenergie (11) in das Aufbaumaterial (4),
- mit einer Antriebseinrichtung (15) zum Erzeugen einer Relativbewegung zwischen der Aufbauplattform (2) und dem Heizelement (6) in x- und/oder y-Richtung,
**dadurch gekennzeichnet, dass** das Heizelement (6) wenigstens zwei gleichzeitig verwendbare Funkticnsöffnungen (18, 19) aufweist, dass eine der wenigstens zwei Funktionsöffnungen als Materialdurchlaß (18) und eine andere der wenigstens zwei Funktionsöffnungen als Strahlungsdurchlaß (19) ausgebildet ist.

2. Vorrichtung (1) nach Anspruch 1, wobei das Heizelement (6) die Aufbauplattform, (2) dauerhaft zumindest teilweise überdeckt.

3. Vorrichtung (1) nach Anspruch 1 oder 2, wobei das Heizelement (6) und die Aufbauplattform (2) vollständig in Überdeckung miteinander gebracht werden können.

4. Vorrichtung (1) nach einem der Ansprüche 1 bis 3, wobei das Heizelement (6) im wesentlichen plattenförmig ausgebildet ist.

5. Vorrichtung (1) nach einem der Ansprüche 1 bis 4,
wobei das Heizelement (6) oberhalb der Aufbauplattform (2) angeordnet ist und dabei entweder von der obersten Aufbauschicht beabstandet ist oder aber die oberste Aufbauschicht berührt.

6. Vorrichtung (1) nach einem der Ansprüche 1 bis 5,
wobei sich die Aufbauplattform, (2) innerhalb einer im Betriebszustand geschlossenen Prozeßkammer (12) befindet und das Heizelement (6) als Begrenzungswand der Prozeßkammer (12) dient.

7. Vorrichtung (1) nach einem der Ansprüche 1 bis 6, wobei das Heizelement (6) unterschiedlich temperierbare Bereiche aufweist.

8. Vorrichtung (1) nach einem der Ansprüche 1 bis 7, wobei die Form der Funktionsöffnungen (18, 19, 20) veränderbar ist.

9. Vorrichtung (1) nach einem der Ansprüche 1 bis 8, mit einer zusätzlichen Wärmequelle (25), ausgebildet zum Bereitstellen von Wärmeenergie, wobei eine der wenigstens zwei Funktionsöffnungen (18, 19, 20) zugleich oder ausschließlich als Heizöffnung (20) zum zusätzlichen Eintragen von Wärmeenergie ausgebildet ist.

10. Verfahren zum Herstellen dreidimensionaler Objekte (3) durch selektives Verfestigen eines schichtweise aufgebrachten Aufbaumaterials (4),
- wobei auf einer in einer x-y-Ebene angeordneten Aufbauplattform (2) wenigstens ein dreidimensionales Objekt (3) schichtweise erzeugt wird,
- wobei ein die Aufbauplattform (2) zumindest teilweise überdeckendes Heizelement (6) Wärmeenergie (11) in das Aufbaumaterial (4) einträgt,
- wobei eine Antriebseinrichtung (15) eine Relativbewegung zwischen der Aufbauplattform (2) und dem Heizelement (6) in x- und/oder y-Richtung erzeugt,
**dadurch gekennzeichnet, dass**
das Heizelement (6) unter Verwendung von wenigstens zwei Funktionsöffnungen (18, 19, 20) gleichzeitig Aufbaumaterial (4) und Strahlungsenergie (8) durchläßt.

## Claims

1. An apparatus (1) for manufacturing three-dimensional objects (3) by selective solidification of a build material (4) applied in layers, comprising
- a build platform (2), arranged in an X-Y-plane, on which at least one three-dimensional object (3) is generated in layers;
- a heating element (6), at least partly overlapping the build platform (2), for inputting thermal energy (11) into the build material (4);
- a drive device (15) for generating a relative motion in an X- and/or Y-direction between the build platform (2) and the heating element (6)
**characterized in that** the heating element (6) comprises at least two simultaneously usable functional openings (18, 19), and **in that** one of the at least two functional openings is embodied as a material passthrough (18) and another of the at least two functional openings is embodied as a radiation passthrough (19).

2. The apparatus (1) according to Clam 1, wherein the heating element (6) constantly at least partly overlaps the build platform (2).

3. The apparatus (1) according to Claim 1 or 2, wherein the heating element (6) and the build platform (2) can be caused to overlap one another completely.

4. The apparatus (1) according to one of Claims 1 to 3, wherein the heating element (6) is of substantially plate-shaped configuration.

5. The apparatus (1) according to one of Claims 1 to 4, wherein the heating element (6) is arranged above the build platform (2) and either is spaced away from the topmost build layer or touches the topmost build layer.

6. The apparatus (1) according to one of Claims 1 to 5, wherein the build platform (2) is located inside a process chamber (12) that is closed in the operating state, and the heating element (6) serves as a demarcating wall of the process chamber (12).

7. The apparatus (1) according to one of Claims 1 to 6, wherein the heating element (6) comprises regions capable of different temperature control.

8. The apparatus (1) according to one of Claims 1 to 7, wherein the shape of the functional openings (18, 19, 20) is modifiable.

9. The apparatus (1) according to one of Claims 1 to 8, having an additional heat source (25) embodied to furnish thermal energy, wherein one of the at least two functional openings (18, 19, 20) is embodied simultaneously or exclusively as a heating opening (20) for additional input of thermal energy.

10. A method for manufacturing three-dimensional objects (3) by selective solidification of a build material (4) applied in layers, wherein
- at least one three-dimensional object (3) is generated, in layers, on a build platform (2) arranged in an X-Y plane;
- a heating element (6) at least partly overlapping the build platform (2) inputs thermal energy (11) into the build material (4);
- a drive device (15) generates a relative motion in an X- and/or Y-direction between the build platform (2) and the heating element (6),
**characterized in that** the heating element (6), using at least two functional openings (18, 19, 20), allows build material (4) and radiation energy (8) to pass through simultaneously.

## Revendications

1. Procédé (1) de fabrication d'objets tridimensionnels (3) par solidification sélective d'un matériau de construction (4) appliqué en couches,
- avec une plate-forme de construction (2) disposée dans un plan x-y sur laquelle est produit en couches au moins un objet tridimensionnel (3),
- avec un élément chauffant (6) recouvrant au moins en partie la plate-forme de construction (2) pour apporter de l'énergie thermique (11) dans le matériau de construction (4),
- avec un dispositif d'entraînement (15) pour générer un mouvement relatif entre la plate-forme de construction (2) et l'élément chauffant (6) dans la direction x et/ou y,
**caractérisé en ce que** l'élément chauffant (6) présente au moins deux ouvertures fonctionnelles (18, 19) pouvant être utilisées simultanément, **en ce que** l'une des au moins deux ouvertures fonctionnelles est réalisée sous forme de passage de matériau (18) et une autre des au moins deux ouvertures fonctionnelles est réalisée sous forme de passage de rayonnement (19).

2. Dispositif (1) selon la revendication 1, dans lequel l'élément chauffant (6) recouvre au moins en partie de manière durable la plate-forme de construction (2).

3. Dispositif (1) selon la revendication 1 ou 2, dans lequel l'élément chauffant (6) et la plate-forme de construction (2) peuvent être amenés complètement en coïncidence l'un avec l'autre.

4. Dispositif (1) selon l'une quelconque des revendications 1 à 3, dans lequel l'élément chauffant (6) est réalisé essentiellement en forme de plaque.

5. Dispositif (1) selon l'une quelconque des revendications 1 à 4, dans lequel l'élément chauffant (6) est disposé au-dessus de la plate-forme de construction (2) et est en l'occurrence soit espacé de la couche de construction la plus supérieure soit vient en contact au contraire avec la couche de construction la plus supérieure.

6. Dispositif (1) selon l'une quelconque des revendications 1 à 5, dans lequel la plate-forme de construction (2) se trouve à l'intérieur d'une chambre de processus (12) fermée dans l'état de fonctionnement et l'élément chauffant (6) sert de paroi de limitation de la chambre de processus (12).

7. Dispositif (1) selon l'une quelconque des revendications 1 à 6, dans lequel l'élément chauffant (6) présente des régions pouvant être différemment régulées en température.

8. Dispositif (1) selon l'une quelconque des revendications 1 à 7, dans lequel la forme des ouvertures fonctionnelles (18, 19, 20) peut être modifiée.

9. Dispositif (1) selon l'une quelconque des revendications 1 à 8, comprenant une source de chaleur supplémentaire (25), réalisée pour fournir de l'énergie thermique, l'une des au moins deux ouvertures fonctionnelles (18, 19, 20) étant réalisée en même temps ou exclusivement sous forme d'ouverture de chauffage (20) pour l'apport supplémentaire d'énergie thermique.

10. Procédé de fabrication d'objets tridimensionnels (3) par solidification sélective d'un matériau de construction (4) appliqué en couches,
- au moins un objet tridimensionnel (3) étant produit en couches sur une plate-forme de construction (2) disposée dans un plan x-y,
- un élément chauffant (6) recouvrant au moins en partie la plate-forme de construction (2) apportant de l'énergie thermique (11) dans le matériau de construction (4),
- un dispositif d'entraînement (15) générant un mouvement relatif entre la plate-forme de construction (2) et l'élément chauffant (6) dans la direction x et/ou y,
**caractérisé en ce que**
l'élément chauffant (6), en utilisant au moins deux ouvertures fonctionnelles (18, 19, 20), laisse passer simultanément du matériau de construction (4) et de l'énergie de rayonnement (8).
